(19) Europäisches Patentamt
European Patent Office
Office européen des brevets

(11) EP 4 709 684 B1

(12) EUROPEAN PATENT SPECIFICATION

(45) Date of publication and mention of the grant of the patent:
**15.07.2026 Bulletin 2026/29**

(21) Application number: **24768262.8**

(22) Date of filing: **06.09.2024**

(51) International Patent Classification (IPC):
***C01B 25/37*** *(2006.01)* ***C01B 25/45*** *(2006.01)*
***H01M 4/58*** *(2010.01)*

(52) Cooperative Patent Classification (CPC):
**C01B 25/375; C01B 25/45; H01M 4/5825;**
Y02E 60/10

(86) International application number:
**PCT/EP2024/074931**

(87) International publication number:
**WO 2025/051918 (13.03.2025 Gazette 2025/11)**

# (54) IRON PHOSPHATE-COMPRISING MATERIALS

EISENPHOSPHATHALTIGE MATERIALIEN

MATÉRIAUX CONTENANT DU PHOSPHATE DE FER

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.09.2023 US 202363537013 P**

(43) Date of publication of application:
**18.03.2026 Bulletin 2026/12**

(73) Proprietor: **Sun Chemical Corporation**
**Parsippany, NJ 07054 (US)**

(72) Inventors:
- **TRGOVICH, Jason**
  **Valparaiso, Indiana 46383 (US)**
- **JONES, Steve**
  **Carlstadt, New Jersey 07072 (US)**
- **URICK, Sarah**
  **Carlstadt, New Jersey 07072 (US)**

(74) Representative: **Carpmaels & Ransford LLP**
**One Southampton Row**
**London WC1B 5HA (GB)**

(56) References cited:
**CN-A- 101 483 236**
**CN-A- 116 605 916**
**JP-A- 2014 088 283**
**US-A1- 2012 237 425**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 709 684 B1

## Description

### BACKGROUND OF THE INVENTION

The demand for iron-phosphate material is expected to increase in the future as the world population grows and pressure for sustainable agriculture, steel production, and energy storage increases. As a result, governments are incentivizing local manufacture of key commodity materials critical to infrastructure and economies, in order to reduce dependency on foreign sources.

Iron-phosphate containing materials play critical roles as food additives, biopesticides, steel surface coatings, adsorption materials, and more. The recent expansion of electric vehicle (EV) manufacturing is projected to cause a future shortage of cobalt and nickel due to the common use of these elements in battery cathode materials. Therefore, alternative earth abundant cathode chemistries such as lithium iron phosphate (also known as LFP, lithium ferrophosphate or $LiFePO_4$) are now being selected as suitable replacements. LFP has an olivine-type crystal structure.

This shift into energy storage not only requires a greater quantity of material to be manufactured, but it also requires higher purity and homogeneity. To achieve these objectives, higher quality and more refined raw materials must be sourced. In the example of lithium iron phosphate cathode material, the iron source is by far the largest contributor of impurities since it typically comes from waste streams and/or recycled sources.

The purity of the raw material is critical as it can affect the process, performance, and cycle life of a battery. For example, it is common to use iron sulfate as a raw material in the production of lithium iron phosphate. However, sulfate presents an environmental issue when the material is calcined under high temperature. Other impurities, such as sodium or potassium, compete with lithium, while other metals create nonuniformity in potential over the electrode surface which can lead to dendrite formation and premature failure of the battery.

One way to remove impurities is to include an intermediate process in which the starting material is transformed (recrystallized) into a compound that can be separated or filtered and washed. Either iron(II) or iron(III) salts can be used in the general formula:

$$mFe^{n+} + nA^{-} \rightleftharpoons Fe_mA_n$$

$\rightleftharpoons Fe_mA_n$ Where n = 2 or 3 and m = 1 or 2 and A is $SO_4$, $NO_3$, or Cl.

The iron salt is then typically reacted with an alkali base in a two-step reaction to form iron oxide.

Step 1: $Fe_mA_n + nOH^- \rightleftharpoons Fe_m(OH)_n + nA^-$

Step 2: $Fe(OH)_n + xO_2 \rightarrow aFeO \cdot Fe_2O_3 \cdot bH_2O$

Where n = 2 or 3; m = 1 or 2; x = 0 - ∞; a = 0 or 1 if b = 0; b = 0 - 2 if a = 0

North America suppliers of lithium iron phosphate have moved toward starting with a form of iron oxide as the iron source since it is one of the least expensive intermediates to produce, and one of the easiest to convert.

U.S. Pat. No. 8673497 mentions the use of various iron sources for making lithium iron phosphate, including iron oxides, iron hydroxide, and the iron oxide-hydroxides α-FeOOH (geothite), β-FeOOH (akageneite), and γ-FeOOH (lepidocrocite). α-FeOOH is the most preferred iron source. The reaction times are long: at least 16 hours when using α-FeOOH and 60 hours when using γ-FeOOH.

Lin et al., CrystEngComm, 2016, 18, 3174 discusses synthesis of iron phosphates via phosphation of β-FeOOH nanorods. Lin emphasizes the importance of β-FeOOH nanorods for the controlled synthesis of $FePO_4 \cdot 2H_2O$ with different phases and morphologies.

CN116605916 A discloses a preparation method of α-FeOOH and a preparation method of iron phosphate.

CN101483236 A discloses a method for preparing lithium iron phosphate/carbon composite material as an anode material of a lithium ionic cell.

JP2014088283 A discloses a method of producing ferric phosphate hydrate, comprising reacting powder of iron oxide particle or powder of hydrous iron oxide particle with a phosphorus compound in a solution, using ferric phosphate hydrate is used as a seed crystal.

US2012/237425 A1 discloses ferric phosphate hydrate particles for use as a precursor of olivine type lithium iron phosphate particles.

There is no prior indication that γ-FeOOH would show significantly superior reaction kinetics during the conversion to iron phosphate compared to other forms of iron sources, such as α-FeOOH and β-FeOOH.

The present application addresses the need for iron-phosphate materials with improved reaction kinetics and faster production times.

Citation or identification of any document in this application is not an admission that such represents prior art to the present invention.

## SUMMARY OF THE INVENTION

The present application discloses a high-speed method for preparing an iron phosphate-comprising material by using lepidocrocite (γ-FeOOH), which shows a significant improvement in reaction kinetics (rate of reaction) compared to other iron oxide forms during the conversion to iron phosphate-comprising materials.

In particular, in a first aspect the invention provides a method of forming an iron phosphate-comprising material, comprising reacting the iron source lepidocrocite (γ-FeOOH) with a phosphorus source selected from phosphoric acid ($H_3PO_4$), phosphorous acid ($H_3PO_3$), $(NH_4)H_2PO_4$, $(NH_4)_2HPO_4$, $(NH_4)_3PO_4$, $Li_3PO_4$, $Li_2HPO_4$, and $LiH_2PO_4$, and mixtures thereof, wherein the reaction is carried out at an acidic pH, resulting in the formation of an iron phosphate-comprising material; wherein the iron phosphate-comprising material is not lithium iron phosphate or a material having an olivine-type crystal structure.

In a second aspect, the invention provides a method of forming an iron phosphate-comprising material comprising the steps of:

(a) reacting the iron source lepidocrocite (y-FeOOH) with a further iron source, resulting in the formation of $Fe_3O_4$;
(b) reacting the resulting $Fe_3O_4$ with a phosphorus source selected from phosphoric acid ($H_3PO_4$), phosphorous acid ($H_3PO_3$), $(NH_4)H_2PO_4$, $(NH_4)_2HPO_4$, $(NH_4)_3PO_4$, $Li_3PO_4$, $Li_2HPO_4$, and $LiH_2PO_4$, and mixtures thereof, wherein the reaction is carried out at an acidic pH, resulting in the formation of an iron phosphate-comprising material;

wherein the iron phosphate-comprising material is not lithium iron phosphate or a material having an olivine-type crystal structure.

As previously mentioned, the use of various iron sources, for example α-FeOOH and β-FeOOH, for preparing iron-phosphate comprising materials is known. Surprisingly, γ-FeOOH reacts much faster, making it advantageous over other forms of iron oxides or iron oxide-hydroxides. Though not wishing to be bound by theory, applicants believe that the reason for the higher reactivity of γ-FeOOH may be due to its propensity to adopt a smaller particle size with more reactive sites. Interestingly, it was also discovered, when converting γ-FeOOH to $Fe_3O_4$, black iron oxide, the rapid rate of reaction to iron-phosphate-comprising materials was maintained.

## DRAWINGS

Figure 1A is a Scanning Electron Microscopy (SEM) image of the sample prepared in Example 25.
Figure 1B is a SEM image of the sample prepared in Example 26 that was calcined at 650°C.
Figure 2A is an X-Ray Diffraction (XRD) pattern of the sample prepared in Example 25.
Figure 2B is an XRD pattern of the sample prepared in Example 26 that was calcined at 650°C.

## DETAILED DESCRIPTION

γ-FeOOH may be obtained from commercial suppliers. γ-FeOOH may also be prepared using a chloride process. U.S. Pat. No. 2939767 mentions a chloride process for preparing α-FeOOH. Gustavo Navarro et al 2008 J. Phys.: Conf. Ser. 134 012023 discusses the synthesis of γ-FeOOH from ferrous chloride ($FeCl_2$).

The phosphorus source is selected from phosphoric acid ($H_3PO_4$), phosphorous acid ($H_3PO_3$), $(NH_4)H_2PO_4$, $(NH_4)_2HPO_4$, $(NH_4)_3PO_4$, $Li_3PO_4$, $Li_2HPO_4$, and $LiH_2PO_4$, and mixtures thereof; or from $H_3PO_4$, $H_3PO_3$, $(NH_4)H_2PO_4$,$(NH_4)_2HPO_4$, $(NH_4)_3PO_4$, and mixtures thereof. The preferred phosphorus source is $H_3PO_4$. For example, the phosphorus source can be 75 wt% or 85 wt% $H_3PO_4$ in water.

The reaction is carried out under acidic conditions, typically in an aqueous solution with pH < 5. The preferred reaction pH is 0.5-4.0, more preferably 0.5-3.5, most preferably 1.0-2.5. The preferred reaction temperature is 50°C-100°C, more preferably 60°C-90°C, most preferably 70°C-90°C. The preferred reaction time is < 7 hours, more preferably 1-6 hours, most preferably 1-5 hours.

Since iron is present in its 3+ oxidation state in the γ-FeOOH iron source and in the desired iron phosphate-comprising material product, it is an advantage of the invention that the iron phosphate-comprising material can be readily formed without the need for control of the atmosphere during the reaction, e.g. without the need to perform the reaction under inert or reducing atmosphere. Accordingly, the reaction is typically carried out under non-inert atmosphere. A non-inert atmosphere may be defined as one under which the oxidation state of iron in the iron source is maintained in the iron

phosphate-comprising material product. For example, a non-inert atmosphere may comprise at least 1 vol% oxygen gas, preferably at least 5 vol% oxygen gas. Air is a preferred non-inert atmosphere. The reaction to form the iron phosphate-comprising material may be performed in the absence of a reducing agent.

It has been found that the molar ratio of P:Fe influences the speed of the conversion of the γ-FeOOH to the iron phosphate-comprising material. The reaction may be carried out at a molar ratio of P:Fe of ≥ 3:1, or ≥ 4:1, preferably ≥ 6:1, or most preferably ≥ 7:1. The upper limit of the P:Fe ratio may be suitably chosen such that excessive amounts of the phosphorus source are not wasted and/or do not require recovering and recycling. Optionally, the reaction is carried out at a molar ratio of P:Fe of ≤ 100:1, or ≤ 50:1, or ≤ 20:1, or ≤ 12:1. Thus, the reaction may be carried out at a molar ratio of P:Fe of 3:1-100:1, or 4:1-50:1, preferably 6:1-20:1, most preferably 7:1-12:1.

The reaction may be carried out at a molar ratio of P:Fe of ≤ 4:1, ≤ 3:1, or ≤ 1.5:1. At these lower ratios, other reaction parameters can be controlled to result in conversion of the γ-FeOOH to the iron phosphate-comprising material over a commercially useful timescale. If the reaction is carried out at a molar ratio of P:Fe of ≤ 1.5:1, ≤ 3:1, or ≤ 4:1, the reaction is preferably carried out at a temperature of at least 80 °C, more preferably at least 82 °C, or at least 85 °C, such as at about 90°C. For example, if the reaction is carried out at a molar ratio of P:Fe of ≤ 1.5:1 the reaction may be carried out at a temperature of at least 85 °C. If the reaction is carried out at a molar ratio of P:Fe of ≤ 3:1 the reaction may be carried out at a temperature of at least 82 °C. If the reaction is carried out at a molar ratio of P:Fe of ≤ 4:1 the reaction may be carried out at a temperature of at least 80 °C. At these lower ratios, the reaction time may be increased to allow for conversion, in particular if the temperature of the reaction is less than 80°C. For example, if the reaction is carried out at a molar ratio of P:Fe of ≤ 1.5:1, ≤ 3:1, or ≤ 4:1 and at a temperature of less than 80°C, the reaction may be carried out for a for a time of at least 6 hours, or at least 8 hours, or at least 10 hours.

The reaction is preferably carried out at a molar ratio of P:Fe of least 1:1, this being the stoichiometric ratio in $FePO_4$, or more preferably at least 1.05:1.

It has been found that the use of γ-FeOOH allows for a rapid conversion to the iron phosphate-comprising material over a wide range of water contents, as defined by the mass of γ-FeOOH relative to the volume of water in the reaction vessel. The reaction is preferably carried out at a mass of γ-FeOOH relative to the volume of water of ≤ 45 g $dm^{-3}$, or ≤ 35 g $dm^{-3}$, or most preferably ≤ 25 g $dm^{-3}$. Optionally, the reaction is carried out at a mass of γ-FeOOH relative to the volume of water of ≥ 0.1 g $dm^{-3}$, ≥ 0.5 g $dm^{-3}$, or ≥ 1 g $dm^{-3}$.

The reaction may be carried out at a mass of γ-FeOOH relative to the volume of water of ≥ 45 g $dm^{-3}$. At these higher ratios of γ-FeOOH to water, other reaction parameters can be controlled to result in conversion of the γ-FeOOH to the iron phosphate-comprising material over a commercially useful timescale. If the reaction is carried out at a mass of γ-FeOOH relative to the volume of water of ≥ 45 g $dm^{-3}$, the reaction is preferably carried out at a temperature of at least 80 °C, more preferably at least 82 °C, or at least 85 °C, such as at about 90°C.

Additionally, when converting γ-FeOOH to $Fe_3O_4$, black iron oxide, the rapid rate of reaction to iron-phosphate materials was maintained. This further illustrates the importance of selecting γ-FeOOH, for example γ-FeOOH produced from a chloride process, as the high reactivity source of iron oxide to produce iron phosphate-comprising materials. The invention may include a step of producing γ-FeOOH from a chloride process, prior to step (a).

There are other methods for producing iron oxide, most commonly using iron sulfate, a byproduct from the refinement of titanium ore to titanium dioxide. The iron sulfate is then reacted with oxygen and an alkali, such as sodium hydroxide, in a hydrothermal process to a pH of about 4 in which the iron oxide precipitates. Generally, this method yields $Fe_2O_3$, $Fe_3O_4$, and α-FeOOH, but not γ-FeOOH.Iron oxide prepared using this process has been known to retain sulfur as an impurity which is not desirable for producing battery materials since it evolves as $SO_x$ (sulfur oxides) during calcination. Emission of $SO_x$ or other volatile sulfur compounds are either pollutants or have a very low odor threshold. Sulfur also produces detrimental side reactions during battery operations, ultimately shortening its life. Iron oxides produced from the chloride process contain a much lower residual sulfur level and are able to produce cleaner iron oxides. Additionally, iron oxides from the chloride process can form smaller particle iron phosphate-comprising materials which can help improve further reactivity and, potentially, battery material processability and performance. Thus, an advantage of the present invention is that it can minimize the amount of impurities such as sulfur in the iron phosphate-comprising material. In one preferred embodiment the method of the present application would result in an iron phosphate-comprising material with < 1000 ppm sulfur, more preferably < 500 ppm sulfur. The concentration of elements in the iron phosphate-comprising material, including sulfur, can be measured by elemental analysis, for example by ICP-OES.

Iron-phosphate-comprising materials pertain to any compound in which at least one iron and at least one phosphate are present, and may be in the presence of other compounds, ions, dopants, surfactants, and/or chelating agents, and may be formed in solution with other such compounds, ions, dopants, surfactants, and/or chelating agents present, and may exist as an intermediate created in-situ during the reaction process. If metals other than iron are present in the iron-phosphate comprising material, they may be present at less than 10 at.%, preferably less than 5 at.%, most preferably less than 1 at.% relative to the amount of iron in the iron-phosphate comprising material.

The iron phosphate-comprising material is not lithium iron phosphate or a material having an olivine-type crystal structure. Materials having an olivine-type crystal structure typically have the general formula $M^1M^2PO_4$, where $M^1$ and $M^2$

refer to cations in an octahedral coordination (e.g. $M^1$ = vacancy, Na, and/or Li; $M^2$ = Mn, Fe, Fe, Mn, and/or Mg) and P corresponds to the tetrahedrally coordinated $P^{5+}$ cation. The crystal structure of a material may be determined by X-ray diffraction as is widely known.

The iron phosphate-comprising material formed by the method may be selected from $FePO_4$, $FePO_4 \cdot 2H_2O$, $Fe_5(PO_4)_4(OH)_2 \cdot 2H_2O$, $Fe_4(P_2O_7)_3$, and $Fe_3(PO_4)_2 \cdot 8H_2O$; preferably $FePO_4$ and $FePO_4 \cdot 2H_2O$. The material formed by the method may depend on the initial iron species, reaction conditions, such as using an oxidation or reducing environment, and post processing heat treatment to synthesize the anhydrous varieties. A simplified reaction scheme showing the formation of $FePO_4 \cdot 2H_2O$ is:

$$\gamma\text{-FeOOH} + 3H^+ + PO_4^{3-} \longrightarrow Fe(PO_4) \cdot 2H_2O$$

The resulting iron phosphate-comprising material may be isolated by routine methods, such as filtration and centrifugation. Following isolation, the iron phosphate-comprising material may be reacted with a lithium source to form lithium iron phosphate.

Anhydrous iron phosphate-comprising materials are a common precursor for making lithium iron phosphate. Thus, the method may further comprise a step of calcining the iron phosphate-comprising material to form an anhydrous iron phosphate-comprising material. A preferred anhydrous iron phosphate-comprising material is $FePO_4$. Preferably, the $FePO_4$ formed by the process adopts a trigonal phase, most preferably adopting the $\alpha$-quartz structure.

The iron phosphate-comprising material formed by the method is not lithium iron phosphate. Thus, typically a lithium source is not present when reacting the $\gamma$-FeOOH with the phosphorus source. However, in a further step, the iron phosphate-comprising material formed by the method (e.g. after isolation and/or calcination) may be reacted with a lithium source to form lithium iron phosphate. Lithium sources may be selected from lithium carbonate ($Li_2CO_3$), lithium hydroxide (LiOH), lithium oxide ($Li_2O$), lithium sulfate ($Li_2SO_4$), lithium chloride (LiCl), hydrates thereof, and mixtures thereof; preferably lithium carbonate ($Li_2CO_3$), lithium hydroxide (LiOH), hydrates thereof, and mixtures thereof, most preferably $Li_2CO_3$.

There are several methods of reacting the lithium source and iron phosphate-comprising material to form lithium iron phosphate. Some method variations use a "one-pot" approach where the lithium source, iron phosphate-comprising material, and a reducing agent such as carbon are added together to a mixing vessel. The resulting slurry is then wet milled, spray dried, and calcined in an inert atmosphere ranging from 300 to 1000 °C, typically about 650 °C. During calcination, the inert atmosphere means that there is no oxygen to react with the carbon source. Instead, the carbon source reacts with oxygen present in the raw materials producing $CO_2$ and reducing the iron. $Fe^{3+}$ ions bound to the phosphate are reduced to $Fe^{2+}$ allowing for the positively charged lithium ion to bind with the now negatively charged phosphate, creating lithium iron phosphate.

The lithium iron phosphate may then be incorporated into an article such as an electrode or a battery cell.

Since iron phosphate is highly insoluble, the reaction is possible in the presence of other compounds, ions, dopants, surfactants, and/or chelating agents, and may be formed in solutions with other such compounds, ions, dopants, surfactants, and/or chelating agents present, and may exist as an intermediate created in-situ during coprecipitation processes.

Preferably, the iron phosphate-comprising material has a particle size distribution characterized by a D50 of ≤ 20 $\mu$m, or ≤ 15 $\mu$m, or ≤ 12 $\mu$m, or ≤ 8 $\mu$m, or ≤ 6 $\mu$m, or ≤ 4 $\mu$m, or ≤ 3 $\mu$m.

Preferably, the $\gamma$-FeOOH has a particle size distribution characterized by a D50 of ≤ 50 $\mu$m, or ≤ 30 $\mu$m, more preferably ≤ 20 $\mu$m, or ≤ 15 $\mu$m.

Unless otherwise indicated, the term "Dn" refers to the diameter below which n% by volume of the particle population is found, e.g. the term "D50" refers to the volume-based median particle diameter below which 50% by volume of the particle population is found. Dn values are preferably determined by laser diffraction. For example, Dn values can be determined in accordance with ISO 13320:2009 using Mie theory.

Uniformity of particle size is an advantageous feature of the iron phosphate after reaction. Thus, preferably the iron phosphate-comprising material has a particle size distribution characterized by a D10, D50, D90 span of ≤ 6, or ≤ 5, or ≤ 4, or ≤ 3, or ≤ 2, or ≤ 1.5, or ≤ 1.

Particle size distribution span is calculated using the following equation:

$$\frac{D90 - D10}{D50}$$

The particle size distribution of the $\gamma$-FeOOH may also be measured by sedimentation, for example using a disc centrifuge particle size analyzer. The $\gamma$-FeOOH may have a particle size distribution measured by sedimentation characterized by a $D_w50$ of ≤ 5 $\mu$m, or ≤ 1 $\mu$m, or ≤ 500 nm, where $D_w50$ refers to the diameter below which 50% of

the weight of the particle population is found.

The first aspect may be defined as a method of forming an iron phosphate-comprising material, comprising reacting the iron source lepidocrocite ($\gamma$-FeOOH) with a phosphorus source selected from phosphoric acid ($H_3PO_4$), phosphorous acid ($H_3PO_3$), $(NH_4)H_2PO_4$, $(NH_4)_2HPO_4$, $(NH_4)_3PO_4$, $Li_3PO_4$, $Li_2HPO_4$, and $LiH_2PO_4$, and mixtures thereof, wherein the reaction is carried out at an acidic pH, resulting in the formation of an iron phosphate-comprising material, wherein:

if the reaction is carried at a molar ratio of P:Fe of ≤ 3:1 or ≤ 4:1, the reaction is carried out at a temperature of at least 80 °C, more preferably at least 82 °C, or at least 85 °C, such as at about 90°C;
if the reaction is carried out at a mass of $\gamma$-FeOOH relative to the volume of water of ≥ 45 g $dm^{-3}$, the reaction is carried out at a temperature of at least 80 °C, more preferably at least 82 °C, or at least 85 °C, such as at about 90°C.

In one variant of the first aspect:

if the reaction is carried out at a molar ratio of P:Fe of ≤ 1.5:1 the reaction is carried out at a temperature of at least 85 °C;
if the reaction is carried out at a molar ratio of P:Fe of 1.5:1-3:1 the reaction is carried out at a temperature of at least 82 °C;
if the reaction is carried out at a molar ratio of P:Fe of 3:1-4:1 the reaction is carried out at a temperature of at least 80 °C;
if the reaction is carried out at a molar ratio of P:Fe of ≥ 4:1 the reaction is carried out at a temperature of at least 50 °C;
if the reaction is carried out at a mass of $\gamma$-FeOOH relative to the volume of water of ≥ 45 g $dm^{-3}$, the reaction is carried out at a temperature of at least 80 °C, more preferably at least 82 °C, or at least 85 °C, such as at about 90°C.

In one variant of the first aspect:

if the reaction is carried at a molar ratio of P:Fe of ≤ 3:1 or ≤ 4:1, the reaction is carried out at a temperature of at least 80 °C, more preferably at least 82 °C, or at least 85 °C, such as at about 90°C;
if the reaction is carried out at a mass of $\gamma$-FeOOH relative to the volume of water of ≥ 45 g $dm^{-3}$, the reaction is carried out at a temperature of at least 80 °C, more preferably at least 82 °C, or at least 85 °C, such as at about 90°C;
the reaction is carried out at pH 0.5-4.0, more preferably 0.5-3.5, most preferably 1.0-2.5; and iron phosphate-comprising material formed by the method is selected from $FePO_4$ and $FePO_4 \cdot 2H_2O$.

In one variant of the first aspect:

the $\gamma$-FeOOH has a particle size distribution characterized by a D50 of ≤ 30 μm, more preferably ≤ 20 μm, or ≤ 15 μm as measured by laser diffraction;
the reaction is carried out at a temperature of 50°C-100°C; more preferably 60°C-90°C; most preferably 70°C-90°C;
the reaction is carried out for a time of < 7 hr, more preferably 1-6 hr., more preferably 1-5 hr., more preferably 2-4 hr., most preferably 2.5-3 hr;
if the reaction is carried at a molar ratio of P:Fe of ≤ 4:1, the reaction is carried out at a temperature of at least 80 °C, more preferably at least 82 °C, or at least 85 °C, such as at about 90°C;
if the reaction is carried out at a mass of $\gamma$-FeOOH relative to the volume of water of ≥ 45 g $dm^{-3}$, the reaction is carried out at a temperature of at least 80 °C, more preferably at least 82 °C, or at least 85 °C, such as at about 90°C;
the reaction is carried out at pH 0.5-4.0, more preferably 0.5-3.5, most preferably 1.0-2.5; and iron phosphate-comprising material formed by the method is selected from $FePO_4$ and $FePO_4 \cdot 2H_2O$.

In the second aspect, $\gamma$-FeOOH is reacted to produce $Fe_3O_4$, before converting to iron phosphate. Thus, the invention provides method of forming an iron phosphate-comprising material comprising the steps of:

(a) reacting the iron source lepidocrocite ($\gamma$-FeOOH) with a further iron source, resulting in the formation of $Fe_3O_4$;
(b) reacting the resulting $Fe_3O_4$ with a phosphorus source selected from phosphoric acid ($H_3PO_4$), phosphorous acid ($H_3PO_3$), $(NH_4)H_2PO_4$, $(NH_4)_2HPO_4$, $(NH_4)_3PO_4$, $Li_3PO_4$, $Li_2HPO_4$, and $LiH_2PO_4$, and mixtures thereof, wherein the reaction is carried out at an acidic pH, resulting in the formation of an iron phosphate-comprising material;

wherein the iron phosphate-comprising material is not lithium iron phosphate or a material having an olivine-type crystal structure.

It will be understood that the $\gamma$-FeOOH, phosphorus source, reaction to form the iron phosphate-comprising material, and the resulting iron phosphate-comprising material of the second aspect may be described in the same way as

for the first aspect.

A simplified reaction scheme in accordance with the second aspect is:

$$2y\text{-}FeOOH + Fe^{2+} + 20H^{-} \rightarrow Fe_3O_4 + 2H_2O + 2H^{+}$$

$$4Fe_3O_4 + 12H_3PO_4 + 6H_2O + O_2 \rightarrow 12FePO_4 \cdot 2H_2O$$

The further iron source in step (a) is preferably a ferrous iron source, i.e. comprising $Fe^{2+}$. For example, a ferrous iron solution is added to the γ-FeOOH stoichiometrically to achieve the correct Fe:O ratio for $Fe_3O_4$. An alkali is then added, typically in reducing conditions, to drive the reaction but prevent oxidation.

Step (b) of the second aspect may be achieved using an equivalent procedure as the step in the first aspect of reacting the γ-FeOOH with a phosphorus source, but replacing the γ-FeOOH with the $Fe_3O_4$.

The present invention has been described in detail, including various embodiments thereof. However, it will be appreciated that those skilled in the art, upon consideration of the present disclosure, may make modifications and/or improvements on this invention that fall within the scope of the invention.

## EXAMPLES

The invention is further described by the following non-limiting examples which further illustrate the invention, and are not intended, nor should they be interpreted to, limit the scope of the invention.

The γ-FeOOH, α-FeOOH (Y5102, ZMAG-5102 equivalent), and $Fe_3O_4$, in the following examples were provided by Sun Cosmetics, LLC, owned by Sun Chemical, Valparaiso, IN USA. β-FeOOH was synthesized as described in Example 17A. The particle size distribution was determined by laser diffraction using a Malvern 3000 particle size analyzer. The γ-FeOOH had D10 = 0.5 μm, D50 = 9.6 μm, and D90 = 38.4 μm. The α-FeOOH had D10 = 0.33 μm, D50 = 0.61 μm, and D90 = 2.66 μm. The β-FeOOH had D10 = 0.3 μm, D50 = 2.6 μm, and D90 = 33.4 μm.

The particle size distribution for these materials was also determined by a disc centrifuge particle size analyzer. The particle size was measured in a DI water/Sucrose gradient on the disc centrifuge at 24000 RPM's. Particle size Distribution by weight results are taken from 0.2-10 microns. The lepidocrocite used had a particle size distribution of $D_w10$ = 86nm, $D_w50$ = 163nm, $D_w90$ = 249 and an iron content of 61-62%.

The conversion to iron phosphate was marked by the color change to white powder.

Note: in all of the following examples, FeOOH was sieved through 10 mesh (2000 μm screen) prior to the reactions to remove any abnormally large pieces of material.

For Examples 1-19, 25, and 28-33 particle size distribution was determined by laser diffraction using a Malvern 3000 particle size analyzer.

Table 1 below, captures the properties of each example after the reactions.

Example 1A (Comparative) vs. Example 1B (Inventive). Conversion of FeOOH to Iron Phosphate

A comparison in reaction rate between α-FeOOH and γ-FeOOH was conducted using the following procedure: 1 gram of either α-FeOOH (Comparative Example 1A) or γ-FeOOH (Inventive Example 1B) was added to 200mL of 5% $H_3PO_4$ (8.9:1 P:Fe ratio) to a 1L Morton flask and stirred with a magnetic stir bar at 300rpm at a temperature of 80°C for 3 hours. The precipitant was vacuum filtered and washed with 4 X 10mL of deionized water and dried at 100°C for 2 hours. After 3 hours there was no color change in the conversion of Ex. 1A, indicating minimal to no reaction took place. In contrast, the conversion of Ex. 1B was marked by a more rapid color change from yellow-orange to very pale off-white color indicating the conversion to iron phosphate. Thus, the use of γ-FeOOH led to a faster rate of reaction than α-FeOOH, despite the higher particle size of the γ-FeOOH than the α-FeOOH used in these examples.

The material produced by Ex. 1B had a particle size distribution of D10 = 2.46μm, D50 = 11.51μm, D90 = 21.23 μm with a span of 1.63.

Example 2 - Conversion of γ-FeOOH to Iron Phosphate

Using the procedure in Examples 1A/1B, the conversion of γ-FeOOH was conducted at 70°C. The result was color change to very pale off-white indicating the conversion to iron phosphate. The material had a particle size distribution of D10 = 2.167μm, D50 = 8.47μm, D90 = 13.82μm with a span of 1.38. The purpose of Example 2 is to show that the conversion can be performed at a lower temperature (70°C).

Example 3 - Conversion of γ-FeOOH to Iron Phosphate

Using the procedure in Examples 1A/1B, the conversion of γ-FeOOH was conducted at 90°C. The result was color change to very pale off-white indicating the conversion to iron phosphate. The material had a particle size distribution of D10 = 5.99μm, D50 = 12.43μm, D90 = 19.62μm with a span of 1.10. The purpose of Example 2 is to show that the conversion can be performed at a higher temperature (90°C).

Example 4 - Conversion of γ-FeOOH to Iron Phosphate

Using the procedure in Examples 1A/1B, the conversion of γ-FeOOH was conducted at 60°C. The result was color change to a darker off-white color as compared to examples 1, 2, 3, etc. indicating a partial conversion to iron phosphate. The material had a particle size distribution of D10 = 1.42μm, D50 = 8.33μm, D90 = 15.74μm with a span of 1.72. The purpose of Example 4 is to show that a further lowering the reaction temperature to 60°C slows the reaction such that only a partial conversion reaction[1] occurs after 3 hr.

[1]Note: though less preferred, partial conversions are still useful since they are also iron-phosphate containing materials which can be used in combination with other processes to reduce the relative time it takes to make an iron-phosphate containing material. Moreover, the increasing the reaction time is expected to result in full conversion.

Example 5 - Conversion of γ-FeOOH to Iron Phosphate

Using the procedure in Examples 1A/1B, the conversion of γ-FeOOH was conducted at 70°C and a stir time of 2 hours. The result was color change to a darker off-white color as compared to examples 1, 2, 3, etc. indicating a partial conversion to iron phosphate. The material had a particle size distribution of D10 = 4.12μm, D50 = 9.68μm, D90 = 16.43μm with a span of 1.27. The purpose of Example 5 is to show that reducing the time to 2 hr. hours results in a partial conversion reaction[1].

[1]Note: though less preferred, partial conversions are still useful since they are also iron-phosphate containing materials which can be used in combination with other processes to reduce the relative time it takes to make an iron-phosphate containing material. Moreover, the increasing the reaction time is expected to result in full conversion.

Example 6 - Conversion of γ-FeOOH to Iron Phosphate

Using the procedure in Examples 1A/1B, the conversion of γ-FeOOH was conducted at 70°C and a stir time of 4 hours. The result was color change to very pale off-white indicating the conversion to iron phosphate. The material had a particle size distribution of D10 = 1.73μm, D50 = 8.53μm, D90 = 15.18μm with a span of 1.58. The purpose of Example 6 is to show that increasing the reaction time to 4 hours has little impact on the reaction, meaning that the reaction was likely complete at 3 hours. The increased mixing time did advantageously reduce the particle size however.

Example 7 - Conversion of γ-FeOOH to Iron Phosphate

Using the procedure in Examples 1A/1B, the conversion of γ-FeOOH was conducted at 70°C, a stir time of 3 hours, and a P:Fe ratio of 12:1. The result was color change to very pale off-white indicating the conversion to iron phosphate. The material had a particle size distribution of D10 = 2.43μm, D50 = 12.61μm, D90 = 22.92μm with a span of 1.63. The purpose of Example 7 is to show that increasing the P:Fe ratio from to 12:1 did not impact the reaction, meaning that the reaction is still fully effective at this ratio.

Example 8 - Conversion of γ-FeOOH to Iron Phosphate

Using the procedure in Examples 1A/1B, the conversion of γ-FeOOH was conducted at 70°C, a stir time of 3 hours, and a P:Fe ratio of 6:1. The result was color change to a darker off-white color as compared to examples 1, 2, 3, etc. indicating a partial conversion to iron phosphate. The material had a particle size distribution of D10 = 1.28μm, D50 = 7.65μm, D90 = 14.79μm with a span of 1.76. The purpose of Example 8 is to show that decreasing the P:Fe ratio to 6:1 results in a partial conversion reaction[1].

[1]Note: though less preferred, partial conversions are still useful since they are also iron-phosphate containing materials which can be used in combination with other processes to reduce the relative time it takes to make an iron-phosphate containing material. Moreover, the increasing the reaction time is expected to result in full conversion.

Example 9 - Conversion of γ-FeOOH to Iron Phosphate

Using the procedure in Examples 1A/1B, the conversion of γ-FeOOH was conducted at 80°C, a stir time of 3 hours, and a P:Fe ratio of 6:1. The result was color change to a darker off-white color as compared to examples 1, 2, 3, etc. but lighter than example 8 indicating a partial conversion to iron phosphate. The material had a particle size distribution of D10 = 2.95μm, D50 = 11.66μm, D90 = 21.02μm with a span of 1.55. The purpose of Example 9 is to show that increasing the temperature from Example 8 to 80°C results in a partial conversion reaction[1], though a slightly darker color indicates a faster reaction than Example 8.

[1]Note: though less preferred, partial conversions are still useful since they are also iron-phosphate containing materials which can be used in combination with other processes to reduce the relative time it takes to make an iron-phosphate containing material. Moreover, the increasing the reaction time is expected to result in full conversion.

Example 10 - Conversion of γ-FeOOH to Iron Phosphate

Using the procedure in Examples 1A/1B, the conversion of γ-FeOOH was conducted at 70°C, a stir time of 4 hours, and a P:Fe ratio of 6:1. The result was color change to very pale off-white indicating the conversion to iron phosphate. The material had a particle size distribution of D10 = 0.89μm, D50 = 4.59μm, D90 = 13.29μm with a span of 2.71. The purpose of Example 10 is to show that increasing the reaction time of Example 8 to 4 hours is sufficient to complete the reaction.

Example 11 - Conversion of γ-FeOOH to Iron Phosphate

Using the procedure in Examples 1A/1B, the conversion of γ-FeOOH was conducted at 70°C, a stir time of 4 hours, and a P:Fe ratio of 3:1. The result was a yellow-orange color indicating a minimal conversion to iron phosphate. The material had a particle size distribution of D10 = 0.90μm, D50 = 4.86μm, D90 = 10.61μm with a span of 2.00. The purpose of Example 11 is to show that decreasing the P:Fe ratio in Example 10 to 3:1 results in minimal or no reaction. However, the Example 11 reaction would likely eventually result in a conversion if allowed to continue for a longer reaction time.

Example 12 - Conversion of γ-FeOOH to Iron Phosphate

Using the procedure in Examples 1A/1B, the conversion of γ-FeOOH was conducted at 70°C, a stir time of 5 hours, and a P:Fe ratio of 3:1. The result was a yellow-orange color indicating a minimal conversion to iron phosphate. The material had a particle size distribution of D10 = 0.98μm, D50 = 5.45μm, D90 = 12.07μm with a span of 2.04. The purpose of Example 12 is to show that increasing the reaction time Example 11 to 5 hours still results in minimal or no reaction. However, the Example 12 reaction would likely eventually result in a conversion if allowed to continue for a longer reaction time.

Example 13 - Conversion of γ-FeOOH to Iron Phosphate

Using the procedure in Examples 1A/1B at 2X scale (i.e. double the amount of reactants (y-FeOOH & $H_3PO_4$), the conversion of γ-FeOOH was conducted at 70°C, a stir time of 4 hours, and a P:Fe ratio of 6:1. The result was color change to very pale off-white indicating the conversion to iron phosphate. The material had a particle size distribution of D10 = 1.88μm, D50 = 7.95μm, D90 = 14.78μm with a span of 1.62. The result of doubling the scale of Example 10 is a small increase in the particle size and a decrease in span. The purpose of Example 13 is to show that the reaction will proceed to completion at scaled up (2X scale) manufacturing conditions.

In Examples 14-19, 20, 21, 25, and 27-33 an overhead mixer was used (Heidolph RZR 2021 with a 6cm flat blade paddle agitator). The purpose of these examples is to show that using an overhead mixer at scaled up manufacturing conditions will result in full conversions

Example 14 - Conversion of γ-FeOOH to Iron Phosphate

Using the procedure in Examples 1A/1B at 2X scale, the conversion of γ-FeOOH was conducted at 70°C, a stir time of 4 hours with an overhead mixer at 300rpms, and a P:Fe ratio of 6:1. The result was color change to very pale off-white indicating the conversion to iron phosphate. The material had a particle size distribution of D10 = 1.02μm, D50 = 4.48μm, D90 = 8.47μm with a span of 1.67. The purpose of Example 14 is to shows that using an overhead mixer instead of the magnetic stirrer in Example 13 produces a big drop in particle size. Thus, the reaction is not dependent on any particular mixer or mixing method.

Example 15 - Conversion of γ-FeOOH to Iron Phosphate

Using the procedure in Examples 1A/1B at 2X scale, the conversion of γ-FeOOH was conducted at 70°C, a stir time of 4 hours with an overhead mixer at 500rpms, and a P:Fe ratio of 6:1. The result was color change to very pale off-white indicating the conversion to iron phosphate. The material had a particle size distribution of D10 = 0.89μm, D50 = 2.43μm, D90 = 4.57μm with a span of 1.52. The result of increasing the mixing speed from 300rpm of Example 14 to 500rpm is an advantageous drop in particle size and span. The purpose of Example 15 is to show that utilizing a higher mixing speed can be advantageous.

Example 16 - Conversion of γ-FeOOH to Iron Phosphate

Using the procedure in Examples 1A/1B at 2X scale with 25% less water, the conversion of γ-FeOOH was conducted at 70°C, a stir time of 4 hours with an overhead mixer at 500rpms, and a P:Fe ratio of 6:1. The result was color change to very pale off-white indicating the conversion to iron phosphate. The material had a particle size distribution of D10 = 0.91μm, D50 = 2.62μm, D90 = 5.00μm with a span of 1.56. The result of reducing the water volume by 25% compared to Example 15 is a slightly larger particle size. The purpose of Example 16 is to show that the reaction can be carried out with 25% reduced water.

Example 17 - Conversion of γ-FeOOH to Iron Phosphate

Using the procedure in Examples 1A/1B at 3X scale with 50% less water, the conversion of γ-FeOOH was conducted at 70°C, a stir time of 4 hours, a P:Fe ratio of 6:1 and an overhead mixer at 500rpms. The result was color change to very pale off-white indicating the conversion to iron phosphate. The material had a particle size distribution of D10 = 1.17μm, D50 = 3.67μm, D90 = 6.78μm with a span of 1.53. The purpose of Example 17 is to show that the reaction can be carried out with 50% reduced water at 3X scale up.

Example 17A - Conversion of β-FeOOH to Iron Phosphate (comparative)

β-FeOOH was synthesized by dissolving 130g $FeCl_3 \cdot 6H_2O$ crystals in 4000mL DI $H_2O$ in a 5L Morton flask. The solution was then heated to 80°C and stirred for 2 hours. The particle size of the β-FeOOH measured by laser diffraction on the Malvern 3000 was D10 = 0.3 μm, D50 = 2.6 μm, and D90 = 33.4 μm. This was too small for conventional filtering methods so it was isolated via centrifugation. Two 500 ml portions were centrifuged for 30 min at 3500 RPM. The supernatant was discarded and then refilled with deionized water. This cycle was repeated two additional times. After the final centrifugation, the β-FeOOH was collected. This centrifugation process was repeated on the remaining reaction slurry. The collected β-FeOOH was then dried at 60°C for 24 hours.

The conversion of β-FeOOH to iron phosphate was conducted using an equivalent procedure to Example 17. The β-FeOOH took 6 hr. to convert and resulted in a particle size distribution of D10 = 3.89mm, D50 = 8.65mm, D90 = 14.42mm with a span of 1.22 compared to the γ-FeOOH which took 4 hr. and resulted in a particle size distribution of D10 = 1.17μm, D50 = 3.67μm, D90 = 6.78μm with a span of 1.53. Thus, the use of β-FeOOH led to a slower rate of reaction than γ-FeOOH, despite the lower particle size of the β-FeOOH than the γ-FeOOH used in these examples.

Example 18 - Conversion of FeOOH to Iron Phosphate

Using the procedure in Examples 1A/1B at 5X scale with 75% less water, the conversion of γ-FeOOH was conducted at 70°C, a stir time of 4 hours, a P:Fe ratio of 6:1 and an overhead mixer at 500rpms. The result was color change to very pale off-white indicating the conversion to iron phosphate. The material had a particle size distribution of D10 = 1.15μm, D50 = 7.05μm, D90 = 12.17μm with a span of 1.56. The purpose of Example 18 is to show that the reaction can be carried out with 75% reduced water at 5X scale up

Example 19 - Conversion of FeOOH to Iron Phosphate

Using the procedure in Examples 1A/1B at 15X scale with 90% less water, the conversion of γ-FeOOH was conducted at 70°C, a stir time of 4 hours, a P:Fe ratio of 6:1 and an overhead mixer at 500rpms. The result was a yellow-orange color indicating a minimal conversion to iron phosphate. The material had a particle size distribution of D10 = 1.14μm, D50 = 4.70μm, D90 = 10.01μm with a span of 1.88. The purpose of Example 19 is to show that reducing the water volume by 90% results in minimal or no reaction. However, the Example 19 reaction would likely eventually result in a conversion if allowed to continue for a longer reaction time.

Based on the above Examples, the following preferred reaction conditions were noted:

- Required pH is acidic; preferably 0.5-4.0; most preferably 0.5-3.5.
- Preferred reaction temperature is 50°C-100°C; more preferably 60°C-90°C; most preferably 70°C-90°C.
- preferred reaction time is < 7 hr.; more preferably 1-6 hr.; more preferably 1-5 hr.; more preferably 2-4 hr.; most preferably 2.5-3 hr.

Table 1: Properties of examples

| Ex. | (μm) | D50 (μm) | D90 (μm) | Span | Final Color | Color Change Reaction Indication | Process Change : Effect on final product vs. Ex. 1B |
|---|---|---|---|---|---|---|---|
| Magnetic Stir Bar Exam ples | | | | | | | |
| 1A | - | - | - | - | Yellow-orange | Minimal or no conversion to iron phosphate | Ex. 1A, 1B processing conditions: 300 RPM; 80°C; 3 hr. stir time; 8.9:1 P:Fe ratio |
| 1B | 2.45 | 11.51 | 21.23 | 1.63 | Pale off-white | Conversion to iron phosphate | |
| 2 | 2.16 | 8.47 | 13.82 | 1.38 | Pale off-white | Conversion to iron phosphate | 70°C : particle size/span within spec's |
| 3 | 5.99 | 12.43 | 19.62 | 1.10 | Pale off-white | Conversion to iron phosphate | 90°C : particle size/span within spec's |
| 4 | 1.420 | 8.33 | 15.74 | 1.72 | Darker off-white | Partial conversion to iron phosphate | 60°C : slower reaction; particle size/span within spec's |
| 5 | 4.12 | 9.68 | 16.43 | 1.27 | Darker off-white | Partial conversion to iron phosphate | 2 hr. stir time : slower reaction; particle size/span within spec's |
| 6 | 1.73 | 8.53 | 15.18 | 1.58 | Pale off-white | Conversion to iron phosphate | 4 hr. stir time : decreased particle size; particle size/span within spec's |
| 7 | 2.43 | 12.61 | 22.92 | 1.63 | Pale off-white | Conversion to iron phosphate | 12:1 P:Fe ratio : particle size/span within spec's |
| 8 | 1.28 | 7.65 | 14.79 | 1.76 | Darker off-white | Partial conversion to iron phosphate | 6:1 P:Fe ratio : reduced particle size; slower reaction |
| 9 | 2.95 | 11.66 | 21.02 | 1.55 | Darker off-white | Partial conversion to iron phosphate | 80°C; 6:1 P:Fe ratio; slower reaction vs. Ex. 1B, faster than Ex. 8; particle size/span within spec's |
| 10 | 0.89 | 4.59 | 13.29 | 2.71 | Pale off-white | Conversion to iron phosphate | 4 hr. stir time; 6:1 P:Fe ratio : particle size/span within spec's |

(continued)

| Ex. | (μm) | D50 (μm) | D90 (μm) | Span | Final Color | Color Change Reaction Indication | Process Change : Effect on final product vs. Ex. 1B |
|---|---|---|---|---|---|---|---|
| Magnetic Stir Bar Exam ples | | | | | | | |
| 11 | 0.90 | 4.86 | 10.61 | 2.00 | Yellow-orange | Minimal or no conversion to iron phosphate | 4 hr. stir time; 3:1 P:Fe ratio : minimal reaction |
| 12 | 0.98 | 5.45 | 12.07 | 2.04 | Yellow-orange | Minimal or no conversion to iron phosphate | 5 hr. stir time; 3:1 P:Fe ratio : minimal reaction |
| 13 | 1.88 | 7.95 | 14.78 | 1.62 | Pale off-white | Conversion to iron phosphate | 2X scale; 4 hr. stir time; 6:1 P:Fe ratio; 70°C : particle size/span within spec's |
| Overhead mixer examples | | | | | | | |
| 14 | 1.02 | 4.48 | 8.47 | 1.67 | Pale off-white | Conversion to iron phosphate | 2X scale; overhead mixer; 300 rpm; 70°C; 4 hr. stir time; 6:1 P:Fe ratio : particle size/span within spec's |
| 15 | 0.89 | 2.43 | 4.57 | 1.52 | Pale off-white | Conversion to iron phosphate | 2X scale; overhead mixer; 500 rpm; 70°C; 4 hr. stir time; 6:1 P:Fe ratio : decreased particle size; particle size/span within spec's |
| 16 | 0.91 | 2.62 | 5.00 | 1.56 | Pale off-white | Conversion to iron phosphate | 2X scale; 25% less water; 500 rpm; 70°C; 4 hr. stir time; 6:1 P:Fe ratio : particle size/span within spec's |
| 17 | 1.17 | 3.67 | 6.78 | 1.53 | Pale off-white | Conversion to iron phosphate | 3X scale; 50% less water; 500 rpm; 70°C; 4 hr. stir time; 6:1 P:Fe ratio: particle size/span within spec's |
| 18 | 1.15 | 7.05 | 12.17 | 1.56 | Pale off-white | Conversion to iron phosphate | 5X scale; 75% less water; 500 rpm; 70°C; 4 hr. stir time; 6:1 P:Fe ratio : particle size/span within spec's |
| 19 | 1.14 | 4.70 | 10.01 | 1.88 | Yellow-orange | Minimal or no conversion to iron phosphate | 15X scale; 90% less water; 500 rpm; 70°C; 4 hr. stir time; 6:1 P:Fe ratio : minimal reaction |

Example 20 - Rate of Reaction for γ-FeOOH

Using the procedure in Examples 1A/1B at 50X scale with 50% less water, the conversion of γ-FeOOH was conducted at 70°C, a P:Fe ratio of 6:1 and an overhead mixer at 500rpms in a 5L flask. Every 30 minutes during the reaction, a 100 mL sample was removed for filtering, washing, and drying. The initial unreacted γ-FeOOH and the subsequent samples through 4.5 hours of reaction time were measured for color. To measure color, a preparation was made by adding 6% of Example 20 to a nitrocellulose lacquer and hand mixing until homogenous. A drawdown was made on a Leneta chart using a 3 mil drawdown bar. Measurements were taken over the white portion of the card using a BYK-mac spectrophotometer at 15 degrees off specular. The hue data in Table 2 shows how the colors progress over the course of the reaction and begins to plateau after about 2.5 hr.

Example 21 - Rate of Reaction for α-FeOOH (comparative)

This example was run as in Example 20 using α-FeOOH instead of the γ-FeOOH. The 30 minute sampling was done up to 5 hours of reaction time and then a final sample after a total of 21.5 hours of reaction time. The hue data is in Table 3 and shows that there is minimal color change over the 5 hours and only a small change after 21.5 hours indicating the slower reaction of α-FeOOH vs. γ-FeOOH despite the lower particle size of the α-FeOOH.

Table 2: Color data from Example 20: Rate of Reaction for γ-FeOOH

| Reaction Time (hr.) | Hue |
|---|---|
| 0 | 71.23 |
| 0.5 | 77.11 |
| 1.0 | 83.73 |
| 1.5 | 92.8 |
| 2.0 | 98.62 |
| 2.5 | 102.19 |
| 3.0 | 103.08 |
| 3.5 | 103.84 |
| 4.0 | 104.24 |
| 4.5 | 103.97 |

Table 3: Color data from Example 21: Rate of Reaction for α-FeOOH

| Reaction Time (hr. | Hue |
|---|---|
| 0 | 68.53 |
| 0.5 | 69.68 |
| 1.0 | 69.54 |
| 1.5 | 69.94 |
| 2.0 | 72.61 |
| 2.5 | 71.58 |
| 3.0 | 71.21 |
| 3.5 | 72.78 |
| 4.0 | 69.38 |
| 4.5 | 71.56 |
| 5.0 | 72.71 |
| 21.5 | 79.48 |

Examples 22-24: The following experiments were conducted to qualify and evaluate the feasibility of converting $Fe_3O_4$ ($FeO \cdot Fe_2O_3$, iron(II,III) oxide, black iron oxide) to iron phosphate and the conversion of γ-FeOOH (γ-$Fe_2O_3 \cdot H_2O$, iron oxide-hydroxide, iron oxyhydroxide) in the presence of an alkali to iron phosphate. In all of the following examples, γ-FeOOH was sieved through 10 mesh (2000 μm screen) before the reactions were performed to remove any abnormally large pieces of material.

The γ-FeOOH had a particle size distribution of $D_w10$ = 86nm, $D_w50$ = 163nm, $D_w90$ = 249nm and $Fe_3O_4$ had a particle size distribution of $D_w10$ = 32nm, $D_w50$ = 453nm, $D_w90$ = 626nm. The samples were measured using a disc centrifuge particle size analyzer. The reaction was determined by the color changing, more precisely, diminishing color over the time of the reaction. A pale-yellow or white color was the most optimal. The reaction was considered complete when the color stopped changing. The target for initial pH was about 2. After 8 hours, the samples were filtered and dried in a convection oven at 60°C.

Example 22: Conversion of γ-FeOOH to iron phosphate.

The γ-FeOOH was ground with a mortar and pestle. Then, 57.840g of 50% $H_3PO_4$ was added to a 250-mL Erlenmeyer flask and heated to 80°C. 3.554g of γ-FeOOH was slowly added with vigorous stirring. The volume was increased to 75 mL with reversed osmosis (RO) water. The contents of the flask were stirred every 15 - 30 minutes. The color started to change after about 45 minutes to a milky yellow color, indicating conversion. The reaction continued to progress visually up to 5 hours into digest. There was no change in appearance after about 5 hours. Additionally, at the 5-hour mark, 5% excess 50% $H_3PO_4$ (0.392 g) was added in an attempt to complete the conversion. The total digest time was about 8 hours. The initial pH was 1.51 and ended at 1.48. The contents were filtered and washed with 20g RO water. The total filtrate was 96.76 g. The total dry weight was 7.29 g. No agglomerations of unreacted γ-FeOOH were present in the final mix. There was clear evidence of a conversion of γ-FeOOH to iron phosphate and shows a clear improvement on the rate of reaction. This was highly unexpected as reaction times were considerably faster compared to those in U.S. Pat. No. 8673497.

Example 23: Conversion of $Fe_3O_4$ (black iron oxide) to iron phosphate

In this experiment, γ-FeOOH was converted to $Fe_3O_4$ by adding ferrous iron solution stoichiometrically to achieve the correct FeO content, and then adding an alkali in reducing conditions to drive the reaction but prevent oxidation. 55.879g of 50% $H_3PO_4$ was added to a 250-mL Erlenmeyer flask and heated to 80°C. 2.315g of $Fe_3O_4$ was slowly added with vigorous stirring. The volume was increased to 75 mL with reversed osmosis (RO) water. The contents of the flask were stirred every 15 - 30 minutes. The color started to change after about 2 hours to a slightly grey color, indicating conversion. The reaction continued to progress visually up to 5 hours into digest. There was no change in appearance after about 5 hours. At the 5-hour mark, 5% excess 50% $H_3PO_4$ (0.293 g) was added in an attempt to complete the conversion. The total digest time was about 8 hours. The initial pH was 1.47 and ended at 1.91. The contents were filtered and washed with 20g RO water. The total filtrate was 97.37 g. The total dry weight was 4.77 g. There was clear evidence of a conversion of $Fe_3O_4$ to iron phosphate, although not complete, shows a clear improvement on the rate of reaction. This was highly unexpected as reaction times were considerably faster compared to those in U.S. Pat. No. 8673497.

Example 24: Conversion of γ-FeOOH to iron phosphate with alkali present.

In this experiment, 57.840g of 50% $H_3PO_4$ and 1.599g of NaOH were added to a 250-mL Erlenmeyer flask and heated to 80°C. The pH had to be adjusted from 3.2, to the target of 2. This was done with an addition of 2.4 mL of 50% HCl. HCl was chosen with the idea that it may catalyze the reaction. 3.554g of γ-FeOOH was slowly added with vigorous stirring. The volume was increased to 75 mL with reversed osmosis (RO) water. The contents of the flask were stirred every 15 - 30 minutes. The color started to change after about 2 hours to a milky yellow color, indicating conversion. The reaction continued to progress visually up to 5 hours into digest. The initial pH was 1.94 and ended at 2.57. There was no change in appearance after 3 hours, however, it was continued to about 5 hours to keep experimental uniformity. At the 5-hour mark, 5% excess 50% $H_3PO_4$ (0.392 g) was added in an attempt to complete the conversion. The total digest time was about 8 hours. The contents were filtered and washed with 20g RO water. The total filtrate was 67.69 g. The total dry weight was 5.89 g. No agglomerations of unreacted γ-FeOOH were present in the final mix. There was clear evidence of a conversion of γ-FeOOH to iron phosphate and shows a clear improvement on the rate of reaction. This was highly unexpected as reaction times were considerably faster compared to those in U.S. Pat. No. 8673497. The final color of the dried material was comparable to the control experiment in Example 22.

Example 25 - Scale-up of Conversion of FeOOH to Iron Phosphate

Using the procedure in Example 17, the conversion of γ-FeOOH was conducted at a 20X scale instead of 3X. The result was color change to very pale off-white indicating the conversion to iron phosphate. The material had a particle size distribution of D10 = 2.43μm, D50 = 5.28μm, D90 = 9.27μm with a span of 1.30. This example shows that the reaction can be carried out at a 20X scale up.

An SEM image of the iron phosphate material is provided in Figure 1A. An XRD pattern of the material is provided in Figure 2A. The pattern confirms that the material is $FePO_4 \cdot 2H_2O$.

Example 26 - Calcination of Iron Phosphate

Calcination experiments were conducted using the material produced in Example 25. Calcination was conducted at 200, 300, 400, 550, and 650°C where 6 g were placed into the furnace at temperature and held for 4 hours. The color of the resulting calcined sample depended on the calcination temperature. The initial very pale off-white color became a pale

light yellow at 200°C, a pale light orange at both 300°C and 400°C, a pale pinkish color at 550°C, and finally an off-white color at 650°C.

An SEM image of the iron phosphate material calcined at 650 °C is provided in Figure 1B. An XRD pattern of the material is provided in Figure 2B. The pattern confirms that the material is $FePO_4$ adopting the $\alpha$-quartz structure.

Example 27 - Conversion of $Fe_2O_3$ to Iron Phosphate (comparative)

Using the procedure in Example 25, where 18 g of $Fe_2O_3$ was substituted for the 20 g of $\gamma$-FeOOH.The result was only a very little color change, even after running for 27 hours, indicating no conversion to iron phosphate. This example shows that the reaction to make iron phosphate is significantly faster using $\gamma$-FeOOH compared to $Fe_2O_3$.

Example 28: Conversion of $\gamma$-FeOOH to iron phosphate

A slurry of 25g of $\gamma$-FeOOH in 422.5 mL of DI water and 48.6g of 85% $H_3PO_4$ (P:Fe ratio of 1.5:1) was placed in a 1L Morton flask, stirred at 500 PRM and was heated to 90°C. After 3 hours of stirring at 90°C, the resulting color was pinkish white, indicating a conversion to iron phosphate. The precipitant was vacuum filtered and washed with 4 X 500mL of deionized water and dried at 100°C for 2 hours. The material had a particle size distribution of D10 = 1.28$\mu$m, D50 = 4.4$\mu$m, D90 = 8.24$\mu$m with a span of 1.58. The purpose of Example 28 was to demonstrate that a lower P:Fe ratio and a lower water volume can be fully converted to iron phosphate when heated to 90°C.

Example 29: Conversion of $\gamma$-FeOOH to iron phosphate

Example 29 was run as Example 28 except that 50g of $\gamma$-FeOOH was slurried in 800mL of DI water and 173g of 85% $H_3PO_4$ (P:Fe ratio of 2.67:1) in a 3L Morton flask. The color of resulting material was pinkish white indicating a conversion to iron phosphate and had a particle size distribution of D10 = 0.80$\mu$m, D50 = 3.04$\mu$m, D90 = 6.59$\mu$m with a span of 1.9. The purpose of Example 29 was to demonstrate that a P:Fe ratio of 2.4:1 can be fully converted to iron phosphate with a lower water volume and when heated to 90°C.

Example 30: Conversion of $\gamma$-FeOOH to iron phosphate

Example 30 was run as Example 28 except that 50g of $\gamma$-FeOOH was slurried in 825mL of DI water and 130.5g of 85% $H_3PO_4$ (P:Fe ratio of 2.01:1) in a 3L Morton flask. The color of resulting material was pinkish white indicating a conversion to iron phosphate and had a particle size distribution of D10 = 2.41$\mu$m, D50 = 4.11$\mu$m, D90 = 6.75$\mu$m with a span of 1.06. The purpose of Example 30 was to demonstrate that a P:Fe ratio of 2.1:1 can be fully converted to iron phosphate with a lower water volume and when heated to 90°C.

Example 31: Conversion of $\gamma$-FeOOH to iron phosphate

Example 31 was run as Example 28 except that 25g of $\gamma$-FeOOH was slurried in 427.5mL of DI water and 40.5g of 85% $H_3PO_4$ (P:Fe ratio of 1.25:1) in a 1L Morton flask. The color of resulting material was pale off white indicating a conversion to iron phosphate and had a particle size distribution of D10 = 1.31$\mu$m, D50 = 4.10$\mu$m, D90 = 7.64$\mu$m with a span of 1.55. The purpose of Example 31 was to demonstrate that a P:Fe ratio of 1.25 can be fully converted to iron phosphate with a lower water volume and when heated to 90°C.

Example 32: Conversion of $\gamma$-FeOOH to iron phosphate

Example 32 was run as Example 28 except that 25g of $\gamma$-FeOOH was slurried in 430.3.5mL of DI water and 35.7g of 85% $H_3PO_4$ (P:Fe ratio of 1.1:1) in a 1L Morton flask. The color of resulting material was a darker off white indicating a partial conversion to iron phosphate and had a particle size distribution of D10 = 1.06$\mu$m, D50 = 3.70$\mu$m, D90 = 7.10$\mu$m with a span of 1.63. The purpose of Example 32 was to demonstrate that a P:Fe ratio of 1.1:1 will be partially converted to iron phosphate with a lower water volume and when heated to 90°C.

Example 33: Conversion of $\gamma$-FeOOH to iron phosphate

Example 33 was run as Example 28 except that the slurry was heated to 80°C and the pH of the slurry was raised to 1.5 with 35% NaOH before the 3 hour stir time. The color of resulting material was pale off white indicating a conversion to iron phosphate and had a particle size distribution of D10 = 0.60$\mu$m, D50 = 1.59$\mu$m, D90 = 6.71$\mu$m with a span of 3.84. The purpose of Example 33 was to demonstrate that a slurry pH of 1.5 results in a full conversion to iron phosphate.

## Claims

1. A method of forming an iron phosphate-comprising material, comprising

   reacting the iron source lepidocrocite ($\gamma$-FeOOH) with a phosphorus source selected from phosphoric acid ($H_3PO_4$), phosphorous acid ($H_3PO_3$), $(NH_4)H_2PO_4$, $(NH_4)_2HPO_4$, $(NH_4)_3PO_4$, $Li_3PO_4$, $Li_2HPO_4$, and $LiH_2PO_4$, and mixtures thereof, wherein the reaction is carried out at an acidic pH, resulting in the formation of an iron phosphate-comprising material;
   wherein the iron phosphate-comprising material is not lithium iron phosphate or a material having an olivine-type crystal structure.

2. The method of any preceding claim, wherein the iron phosphate-comprising material comprises a sulfur content of <1000 ppm or <500 ppm.

3. The method of any preceding claim, wherein:

   (a) the iron phosphate-comprising material has a particle size distribution **characterized by** a D50 of $\leq$ 20 $\mu$m, or $\leq$ 15 $\mu$m, or $\leq$ 12 $\mu$m, or $\leq$ 10 $\mu$m; and/or
   (b) the iron phosphate-comprising material has a particle size distribution span ((D90-D10)/D50) of $\leq$ 6, or $\leq$ 5, or $\leq$ 4, or $\leq$ 3, or $\leq$ 2; and/or
   (c) the $\gamma$-FeOOH has a particle size distribution **characterized by** a D50 of $\leq$ 50 $\mu$m, or $\leq$ 30 $\mu$m, or $\leq$ 20 $\mu$m, or $\leq$ 15 $\mu$m.

4. The method of any preceding claim, wherein the reaction is carried out in the presence of additional reactants and/or additives selected from the group consisting of ion sources, dopants, surfactants and chelating agents; optionally wherein the reaction is carried out in the presence of additional ion sources and/or dopants.

5. The method of any preceding claim, wherein the iron phosphate-comprising material is selected from $FePO_4$, $FePO_4 \cdot 2H_2O$, $Fe_5(PO_4)_4(OH)_2 \cdot 2H_2O$, $Fe_4(P_2O_7)_3$, and $Fe_3(PO_4)_2 \cdot 8H_2O$; optionally wherein the iron phosphate-comprising material is selected from $FePO_4$ and $FePO_4 \cdot 2H_2O$; or wherein the iron phosphate-comprising material is $FePO_4$ adopting a trigonal phase, most preferably $FePO_4$ adopting the $\alpha$-quartz structure.

6. The method of any preceding claim, wherein:

   (a) the reaction is carried out at pH < 5, or at pH 0.5-4.0; or at pH 0.5-3.5, or at pH 1.0-2.5; and/or
   (b) if the reaction is carried out at a molar ratio of P:Fe of $\leq$ 1.5:1, $\leq$ 3:1, or $\leq$ 4:1, the reaction is carried out at a temperature of at least 80 °C, or at least 82 °C, or at least 85 °C, such as at 90°C; and/or
   (c) the reaction is carried out at a molar ratio of P:Fe of $\geq$ 3:1, or $\geq$ 4:1, or $\geq$ 6:1, or $\geq$ 7:1; and/or
   (d) the reaction is carried out at a molar ratio of P:Fe of $\leq$ 100:1, or $\leq$ 50:1, or $\leq$ 20:1, or $\leq$ 12:1.

7. The method of any preceding claim, wherein:

   (a) the reaction is carried out at a temperature of 50°C-100°C; or 60°C-90°C; or 70°C-90°C; and/or
   (b) the reaction is carried out at for a period of $\leq$ 7 hr.; or 1-6 hr.; or 1-5 hr.; or 2-4 hr.; or 2.5-3 hr.

8. The method of any preceding claim, wherein if the reaction is carried out at a mass of $\gamma$-FeOOH relative to the volume of water of $\geq$ 45 g $dm^{-3}$, the reaction is carried out at a temperature of at least 80 °C, or at least 82 °C, or at least 85 °C, such as at 90°C.

9. The method of any of claims 1-7, wherein the reaction is carried out at a mass of $\gamma$-FeOOH relative to the volume of water of $\leq$ 45 g $dm^{-3}$, or $\leq$ 35 g $dm^{-3}$, or $\leq$ 25 g $dm^{-3}$ and optionally $\geq$ 0.1 g $dm^{-3}$, $\geq$ 0.5 g $dm^{-3}$, or $\geq$ 1 g $dm^{-3}$.

10. The method of any preceding claim, wherein the reaction is carried out under a non-inert atmosphere such as an air atmosphere.

11. A method of forming an iron phosphate-comprising material comprising the steps of:

    (a) reacting the iron source lepidocrocite ($\gamma$-FeOOH) with a further iron source, resulting in the formation of $Fe_3O_4$;

(b) reacting the resulting $Fe_3O_4$ with a phosphorus source selected from phosphoric acid ($H_3PO_4$), phosphorous acid ($H_3PO_3$), $(NH_4)H_2PO_4$, $(NH_4)_2HPO_4$, $(NH_4)_3PO_4$, $Li_3PO_4$, $Li_2HPO_4$, and $LiH_2PO_4$, and mixtures thereof, wherein the reaction is carried out at an acidic pH, resulting in the formation of an iron phosphate-comprising material;

wherein the iron phosphate-comprising material is not lithium iron phosphate or a material having an olivine-type crystal structure.

**12.** The method of claim 11, wherein the further iron source is a ferrous iron source.

**13.** A method of forming an iron phosphate-comprising material according to any preceding claim, wherein if metals other than iron are present in the iron-phosphate comprising material, they are present at less than 10 at.%, or less than 5 at.%, or less than 1 at.% relative to the amount of iron in the iron-phosphate comprising material.

**14.** A method of forming an iron phosphate-comprising material according to any preceding claim, comprising isolating the resultant iron phosphate-comprising material; optionally comprising calcining the isolated iron phosphate-comprising material to form an anhydrous iron phosphate-comprising material; optionally wherein the anhydrous iron phosphate-comprising material is $FePO_4$.

**15.** A method of forming lithium iron phosphate, comprising following the method of any preceding claim, and reacting the iron phosphate-comprising material with a lithium source to form lithium iron phosphate.

**16.** A method of forming an article, comprising following the method of any of claims 1-14 to form an iron phosphate-comprising material, or following the method of claim 15 to form lithium iron phosphate, and forming an article comprising the iron phosphate-comprising material or the lithium iron phosphate.

**17.** The method of claim 16, wherein the article is an electrode or a battery cell.

## Patentansprüche

**1.** Verfahren zur Herstellung eines Eisenphosphat-umfassenden Materials, umfassend

Umsetzen der Eisenquelle Lepidokrokit ($\gamma$-FeOOH) mit einer Phosphorquelle ausgewählt aus Phosphorsäure ($H_3PO_4$), phosphoriger Säure ($H_3PO_3$), $(NH_4)H_2PO_4$, $(NH_4)_2HPO_4$, $(NH_4)_3PO_4$, $Li_3PO_4$, $Li_2HPO_4$ und $LiH_2PO_4$ und Gemischen davon, wobei die Reaktion bei einem sauren pH-Wert durchgeführt wird, um ein Eisenphosphat-umfassendes Materials zu bilden;
wobei das Eisenphosphat-umfassende Material weder Lithium-Eisenphosphat noch ein Material mit einer Kristallstruktur vom Olivin-Typ ist.

**2.** Verfahren nach einem der vorstehenden Ansprüche, wobei das Eisenphosphat-umfassende Material einen Schwefelgehalt von <1000 ppm oder <500 ppm aufweist.

**3.** Verfahren nach einem der vorstehenden Ansprüche, wobei:

(a) das Eisenphosphat-umfassende Material eine Partikelgrößenverteilung aufweist, die durch einen D50 von $\leq$ 20 $\mu$m oder $\leq$ 15 $\mu$m oder $\mu$m 12 $\leq$ oder $\mu$m 10 $\leq$ gekennzeichnet ist; und/oder
(b) das Eisenphosphat-umfassende Material eine Partikelgrößenverteilungsspanne ((D90-D10)/D50) von $\leq$ 6, $\leq$ 5, $\leq$ 4, $\leq$ 3 oder $\leq$ 2 aufweist; und/oder
(c) das $\gamma$-FeOOH eine Partikelgrößenverteilung aufweist, die durch einen D50 von $\leq$ 50 $\mu$m oder $\leq$ 30 $\mu$m oder $\mu$m 20 $\leq$ oder $\mu$m 15 $\leq$ gekennzeichnet ist.

**4.** Verfahren nach einem der vorstehenden Ansprüche, wobei die Reaktion in Gegenwart von zusätzlichen Reaktanten und/oder Additiven ausgewählt aus der Gruppe bestehend aus Ionenquellen, Dotierstoffen, Tensiden und Chelatbildnern durchgeführt wird; gegebenenfalls wobei die Reaktion in Gegenwart zusätzlicher Ionenquellen und/oder Dotierstoffe durchgeführt wird.

**5.** Verfahren nach einem der vorstehenden Ansprüche, wobei das Eisenphosphat-umfassende Material ausgewählt ist

aus $FePO_4$, $FePO_4 \cdot 2H_2O$, $Fe_3(PO_4)_4(OH)_2 \cdot 2H_2O$, $Fe_4(P_2O_7)_3$ und $Fe_3(PO_4)_2 \cdot 8H_2O$; gegebenenfalls wobei das Eisenphosphat-umfassende Material ausgewählt ist aus $FePO_4$ und $FePO_4 \cdot 2H_2O$; oder wobei das Eisenphosphat-umfassende Material $FePO_4$ ist, das eine trigonale Phase annimmt, vorzugsweise $FePO_4$, das die $\alpha$-Quarzstruktur annimmt.

**6.** Verfahren nach einem der vorstehenden Ansprüche, wobei:

(a) die Reaktion bei pH < 5; oder bei pH 0,5-4,0; oder bei pH 0,5-3,5 oder bei pH 1,0-2,5 durchgeführt wird; und/oder
(b) wenn die Reaktion bei einem Molverhältnis P:Fe von ≤ 1,5:1, ≤ 3:1 oder ≤ 4:1 durchgeführt, die Reaktion bei einer Temperatur von wenigstens 80 °C oder wenigstens 82 °C oder wenigstens 85 °C, wie z.B. bei 90 °C, durchgeführt wird; und/oder
(c) die Reaktion bei einem Molverhältnis von P:Fe von ≥ 3:1 oder ≥ 4:1 oder ≥ 6:1 oder ≥ 7:1 durchgeführt wird; und/oder
(d) die Reaktion bei einem Molverhältnis von P:Fe von ≤ 100:1 oder ≤ 50:1 oder ≤ 20:1 oder ≤ 12:1 durchgeführt wird.

**7.** Verfahren nach einem der vorstehenden Ansprüche, wobei:

(a) die Reaktion bei einer Temperatur von 50 °C bis 100 °C; oder 60 °C bis 90 °C; oder 70 °C bis 90 °C durchgeführt wird; und/oder
(b) die Reaktion für einen Zeitraum von < 7 h; oder 1-6 h; oder 1-5 h; oder 2-4 h; oder 2,5-3 h durchgeführt wird.

**8.** Verfahren nach einem der vorstehenden Ansprüche, wobei, wenn die Reaktion mit einer Masse von $\gamma$-FeOOH bezogen auf das Volumen von Wasser von ≥ 45 g $dm^{-3}$ durchgeführt wird, die Reaktion bei einer Temperatur von wenigstens 80 °C oder wenigstens 82 °C oder wenigstens 85 °C, wie z.B. bei 90 °C, durchgeführt wird.

**9.** Verfahren nach einem der Ansprüche 1-7, wobei die Reaktion mit einer Masse von $\gamma$-FeOOH bezogen auf das Volumen von Wasser von ≤ 45 g $dm^{-3}$ oder ≤ 35 g $dm^{-3}$ oder ≤ 25 g $dm^{-3}$ und gegebenenfalls ≥ 0,1 g $dm^{-3}$, ≥ 0,5 g $dm^{-3}$ oder ≥ 1 g $dm^{-3}$ durchgeführt wird.

**10.** Verfahren nach einem der vorstehenden Ansprüche, wobei die Reaktion unter einer nicht-inerten Atmosphäre, wie z.B. einer Luftatmosphäre, durchgeführt wird.

**11.** Verfahren zur Herstellung eines Eisenphosphat-umfassenden Materials, umfassend die Schritte:

(a) Umsetzen der Eisenquelle Lepidokrokit ($\gamma$-FeOOH) mit einer weiteren Eisenquelle, um $Fe_3O_4$ zu bilden;
(b) Umsetzen des erhaltenen $Fe_3O_4$ mit einer Phosphorquelle ausgewählt aus Phosphorsäure ($H_3PO_4$), phosphoriger Säure ($H_3PO_3$), $(NH_4)H_2PO_4$, $(NH_4)_2HPO_4$, $(NH_4)_3PO_4$, $Li_3PO_4$, $Li_2HPO_4$ und $LiH_2PO_4$ und Gemischen davon, wobei die Reaktion bei einem sauren pH-Wert durchgeführt wird, um ein Eisenphosphat-umfassendes Materials zu bilden;

wobei das Eisenphosphat-umfassende Material weder Lithium-Eisenphosphat noch ein Material mit einer Kristallstruktur vom Olivin-Typ ist.

**12.** Verfahren nach Anspruch 11, wobei die weitere Eisenquelle eine Eisen(II)-haltige Eisenquelle ist.

**13.** Verfahren zur Herstellung eines Eisenphosphat-umfassenden Materials nach einem der vorstehenden Ansprüche, wobei, wenn von Eisen verschiedene Metalle in dem Eisenphosphat-umfassenden Material vorhanden sind, sie mit weniger als 10 At.-% oder weniger als 5 At.-% oder weniger als 1 At.-%, bezogen auf die Menge an Eisen, in dem Eisenphosphat-umfassenden Material vorhanden sind.

**14.** Verfahren zur Herstellung eines Eisenphosphat-umfassenden Materials nach einem der vorstehenden Ansprüche, umfassend Isolieren des erhaltenen Eisenphosphat-umfassenden Materials; gegebenenfalls umfassend Kalzinieren des isolierten Eisenphosphat-umfassenden Materials, um ein wasserfreies Eisenphosphat-umfassendes Material zu bilden; gegebenenfalls wobei das wasserfreie Eisenphosphat-umfassende Material $FePO_4$ ist.

**15.** Verfahren zur Herstellung von Lithium-Eisenphosphat, umfassend Ausführen des Verfahrens nach einem der

vorstehenden Ansprüche und Umsetzen des Eisenphosphat-umfassenden Materials mit einer Lithiumquelle, um Lithium-Eisenphosphat zu bilden.

**16.** Verfahren zur Herstellung eines Gegenstands, umfassend Ausführen des Verfahrens nach einem der Ansprüche 1-14, um ein Eisenphosphat-umfassendes Material zu bilden, oder Ausführen des Verfahrens nach Anspruch 15, um Lithium-Eisenphosphat zu bilden, und Bilden eines Gegenstands, der das Eisenphosphat-umfassende Material oder das Lithium-Eisenphosphat umfasst.

**17.** Verfahren nach Anspruch 16, wobei der Gegenstand eine Elektrode oder eine Batteriezelle ist.

## Revendications

**1.** Procédé de formation d'un matériau comprenant du phosphate de fer, comprenant

la mise en réaction de la source de fer lépidocrocite ($\gamma$-FeOOH) avec une source de phosphore choisie parmi l'acide phosphorique ($H_3PO_4$), l'acide phosphoreux ($H_3PO_3$), $(NH_4)H_2PO_4$, $(NH_4)_2HPO_4$, $(NH_4)_3PO_4$, $Li_3PO_4$, $Li_2HPO_4$, et $LiH_2PO_4$, et leurs mélanges, dans lequel la réaction est effectuée à un pH acide, entraînant la formation d'un matériau contenant du phosphate de fer ;
dans lequel le matériau comprenant du phosphate de fer n'est pas du phosphate de fer de lithium ou un matériau ayant une structure cristalline de type olivine.

**2.** Procédé selon l'une quelconque des revendications précédentes, dans lequel le matériau comprenant du phosphate de fer comprend une teneur en soufre de < 1 000 ppm ou < 500 ppm.

**3.** Procédé selon une quelconque revendication précédente, dans lequel:

(a) le matériau comprenant du phosphate de fer a une distribution de taille de particules **caractérisée par** un D50 de $\leq$ 20 $\mu$m, ou $\leq$ 15 $\mu$m, ou $\leq$ 12 $\mu$m, ou $\leq$ 10 $\mu$m ; et/ou
(b) le matériau contenant du phosphate de fer a une étendue de distribution de tailles de particules ((D90-D10)/D50) de $\leq$ 6, ou $\leq$ 5, ou $\leq$ 4, ou $\leq$ 3, ou $\leq$ 2 ; et/ou
(c) le $\gamma$-FeOOH a une distribution de taille de particules **caractérisée par** un D50 de $\leq$ 50 $\mu$m, ou $\leq$ 30 $\mu$m, ou $\leq$ 20 $\mu$m, ou $\leq$ 15 $\mu$m.

**4.** Procédé selon l'une quelconque des revendications précédentes, dans lequel la réaction est effectuée en présence de réactifs et/ou d'additifs supplémentaires choisis dans le groupe constitué par des sources d'ions, des dopants, des tensioactifs et des agents chélatants ; facultativement dans lequel la réaction est effectuée en présence de sources d'ions et/ou de dopants supplémentaires.

**5.** Procédé selon l'une quelconque des revendications précédentes, dans lequel le matériau comprenant du phosphate de fer est choisi parmi $FePO_4$, $FePO_4{\cdot}2H_2O$, $Fe_5(PO_4)_4(OH)_2{\cdot}2H_2O$, $Fe_4(P_2O_7)_3$, et $Fe_3(PO_4)_2{\cdot}8H_2O$ ; éventuellement dans lequel le matériau comprenant du phosphate de fer est choisi parmi $FePO_4$ et $FePO_4{\cdot}2H_2O$ ; ou dans lequel le matériau comprenant du phosphate de fer est $FePO_4$ adoptant une phase trigonale, le plus préférablement $FePO_4$ adoptant la structure de $\alpha$-quartz.

**6.** Procédé selon une quelconque revendication précédente, dans lequel:

(a) la réaction est effectuée à un pH < 5, ou à un pH de 0,5 à 4,0, ou à un pH de 0,5 à 3,5, ou à un pH de 1,0 à 2,5 ; et/ou
(b) si la réaction est conduite à un rapport molaire P:Fe $\leq$ 1,5:1, $\leq$ 3:1 ou $\leq$ 4:1, la réaction est conduite à une température d'au moins 80 °C, ou d'au moins 82 °C, ou d'au moins 85 °C, tel qu'à 90 °C ; et/ou
(c) la réaction est effectuée à un rapport molaire P:Fe $\geq$ 3:1, ou $\geq$ 4:1, ou $\geq$ 6:1, ou $\geq$ 7:1 ; et/ou
(d) la réaction est effectuée à un rapport molaire P:Fe $\leq$ 100:1, ou $\leq$ 50:1, ou $\leq$ 20:1, ou $\leq$ 12:1.

**7.** Procédé selon une quelconque revendication précédente, dans lequel:

(a) la réaction est effectuée à une température de 50 °C-100 °C ; ou 60 °C-90 °C ; ou 70 °C-90 °C ; et/ou
(b) la réaction est effectuée pendant une durée < 7 h ; ou 1-6 h ; ou 1-5 h ; ou 2-4 h ; ou 2,5-3 h.

**8.** Procédé selon l'une quelconque des revendications précédentes, dans lequel si la réaction est effectuée à une masse de γ-FeOOH par rapport au volume d'eau de $\geq 45$ g $dm^{-3}$, la réaction est effectuée à une température d'au moins 80 °C, ou d'au moins 82 °C, ou d'au moins 85 °C, tel qu'à 90 °C.

**9.** Procédé selon l'une quelconque des revendications 1 à 7, dans lequel la réaction est effectuée à une masse de γ-FeOOH par rapport au volume d'eau de $\leq 45$ g $dm^{-3}$, ou $\leq 35$ g $dm^{-3}$, ou $\leq 25$ g $dm^{-3}$ et facultativement $\geq 0,1$ g $dm^{-3}$, $\geq 0,5$ g $dm^{-3}$ 'ou $\geq 1$ g $dm^{-3}$.

**10.** Procédé selon l'une quelconque des revendications précédentes, dans lequel la réaction est effectuée sous une atmosphère non inerte telle qu'une atmosphère d'air.

**11.** Procédé de formation d'un matériau comprenant du phosphate de fer comprenant les étapes de :

(a) mise en réaction de la source de fer lépidocrocite (γ-FeOOH) avec une autre source de fer, entraînant la formation de $Fe_3O_4$;
(b) mise en réaction du $Fe_3O_4$ résultant avec une source de phosphore choisie parmi l'acide phosphorique ($H_3PO_4$), l'acide phosphoreux ($H_3PO_3$), $(NH_4)H_2PO_4$, $(NH_4)_2HPO_4$, $(NH_4)_3PO_4$, $Li_3PO_4$, $Li_2HPO_4$, et $LiH_2PO_4$, et leurs mélanges, dans lequel la réaction est effectuée à un pH acide, entraînant la formation d'un matériau comprenant du phosphate de fer ;

dans lequel le matériau comprenant du phosphate de fer n'est pas du phosphate de fer de lithium ou un matériau ayant une structure cristalline de type olivine.

**12.** Procédé selon la revendication 11, dans lequel l'autre source de fer est une source de fer ferreux.

**13.** Procédé de formation d'un matériau comprenant du phosphate de fer selon l'une quelconque des revendications précédentes, dans lequel, si des métaux autres que le fer sont présents dans le matériau comprenant du phosphate de fer, ils sont présents à moins de 10 % at., ou moins de 5 % at., ou moins de 1 % at. par rapport à la quantité de fer dans le matériau comprenant du phosphate de fer.

**14.** Procédé de formation d'un matériau comprenant du phosphate de fer selon l'une quelconque des revendications précédentes, comprenant l'isolement du matériau comprenant du phosphate de fer résultant ; comprenant facultativement la calcination du matériau isolé comprenant du phosphate de fer pour former un matériau anhydre comprenant du phosphate de fer ; facultativement dans lequel le matériau anhydre comprenant du phosphate de fer est $FePO_4$.

**15.** Procédé de formation de phosphate de fer et de lithium, comprenant la mise en œuvre du procédé selon l'une quelconque des revendications précédentes, et la mise en réaction du matériau comprenant du phosphate de fer avec une source de lithium pour former du phosphate de fer et de lithium.

**16.** Procédé de formation d'un article, comprenant le fait de suivre le procédé selon l'une quelconque des revendications 1-14 pour former un matériau comprenant du phosphate de fer, ou de suivre le procédé selon la revendication 15 pour former du phosphate de fer et de lithium, et la formation d'un article comprenant le matériau comprenant du phosphate de fer ou le phosphate de fer et de lithium.

**17.** Procédé selon la revendication 16, dans lequel l'article est une électrode ou une cellule de batterie.

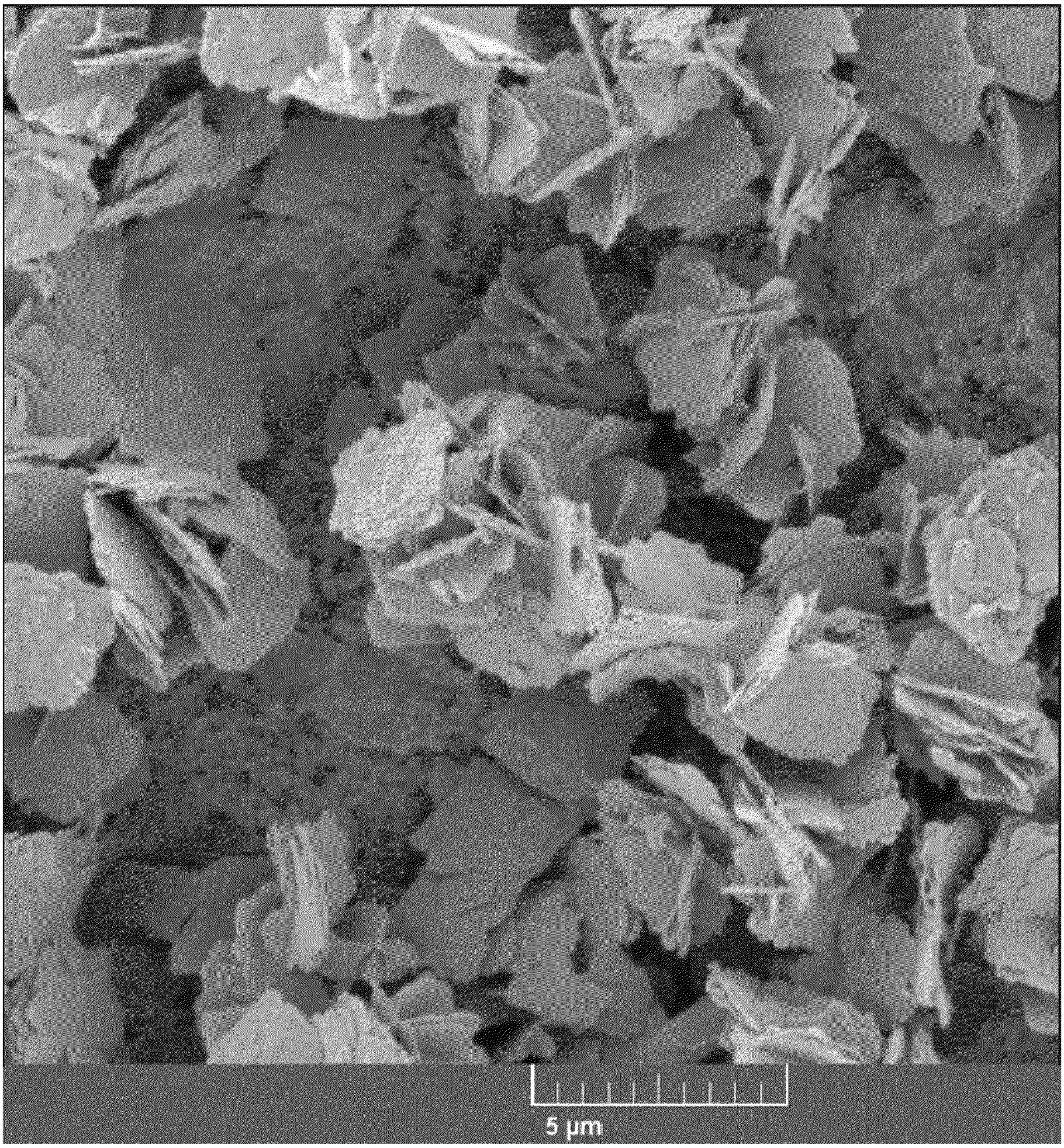


Figure 1A

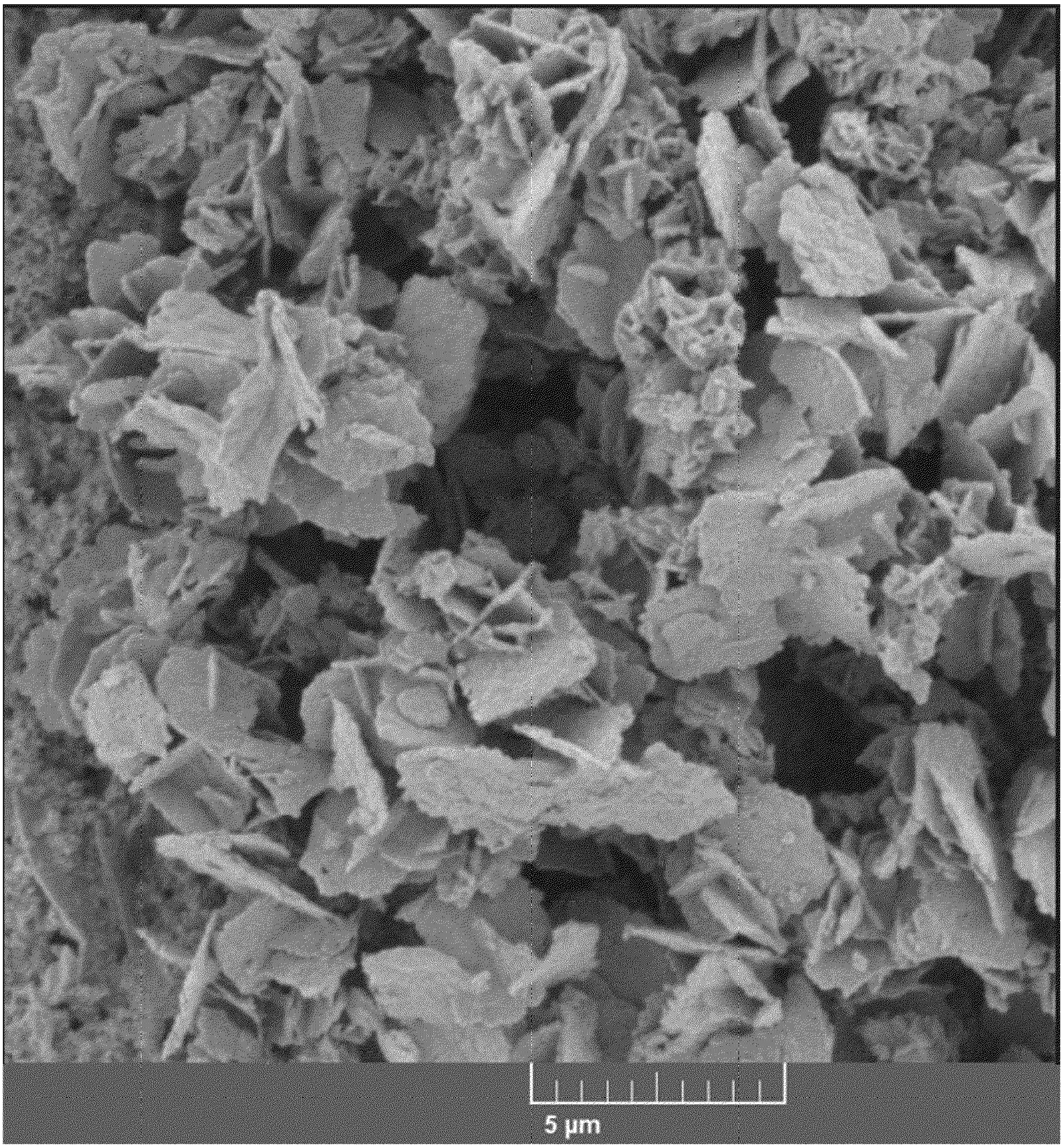


Figure 1B

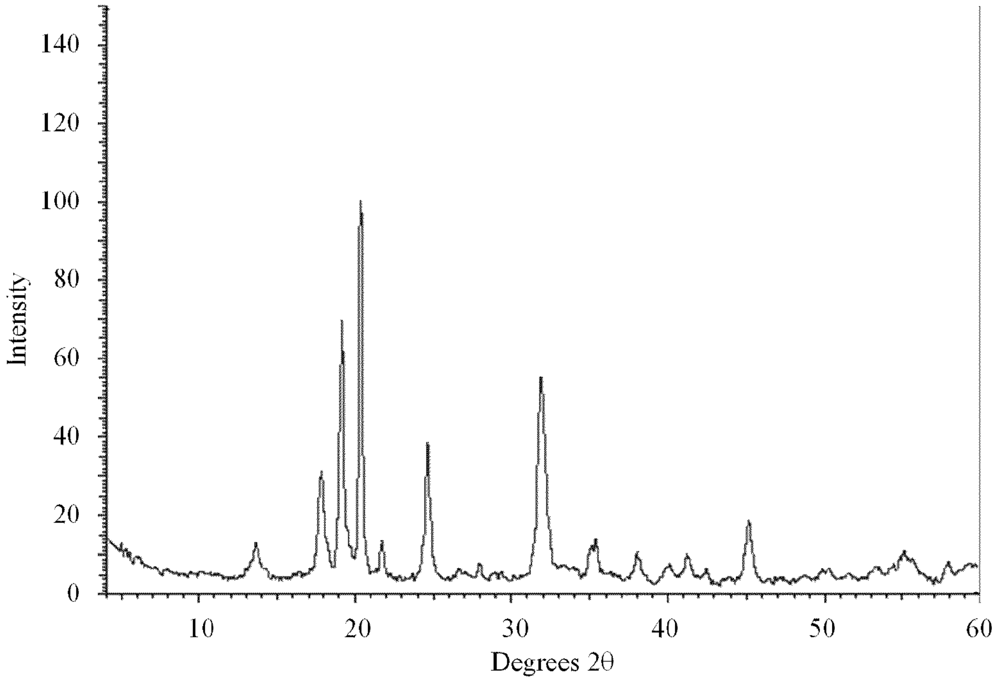


Figure 2A

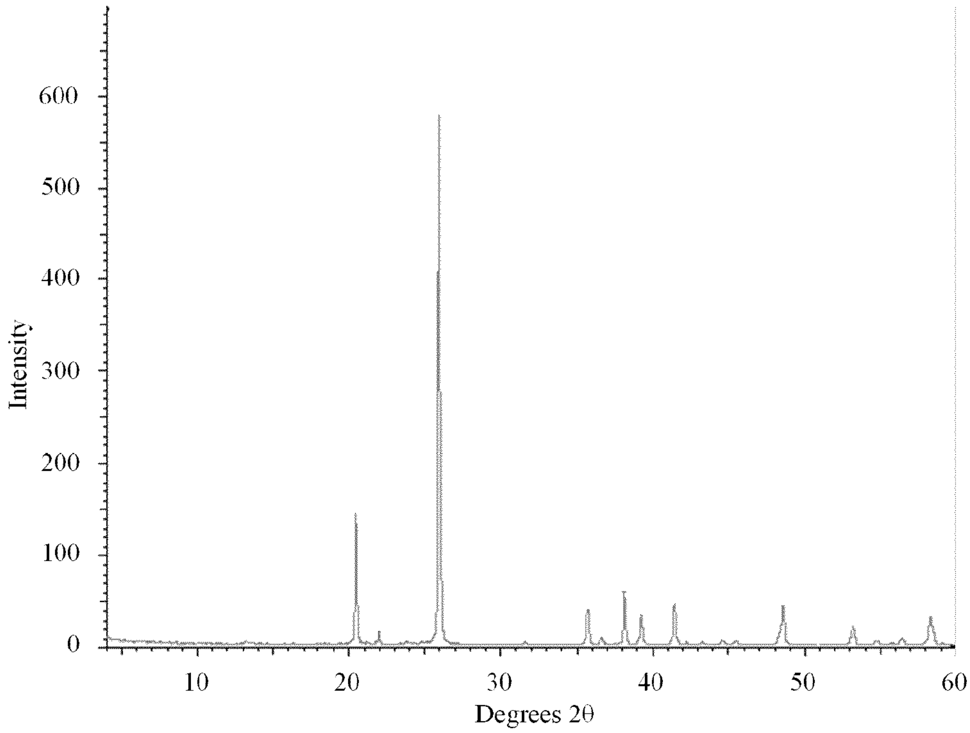


Figure 2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 8673497 B
- CN 116605916 A
- CN 101483236 A
- JP 2014088283 A
- US 2012237425 A1
- US 2939767 A

### Non-patent literature cited in the description

- **LIN et al.** *CrystEngComm*, 2016, vol. 18, 3174
- **GUSTAVO NAVARRO et al.** *J. Phys.: Conf. Ser.*, 2008, vol. 134, 012023